# EUROPÄISCHE PATENTSCHRIFT

(11) **EP 0 828 099 B1**
(45) Veröffentlichungstag und Bekanntmachung des Hinweises auf die Patenterteilung: **08.05.2002**
(21) Anmeldenummer: 97115162.6
(22) Anmeldetag: 02.09.1997
(51) Int. Cl.: F16H 61/30

(54) **Schaltvorrichtung für ein Zahnräderwechselgetriebe**
Shift actuator for a change-speed gearbox
Dispositif de commande d'une boîte de vitesses

(30) Priorität: 04.09.1996 DE 19635866
(43) Veröffentlichungstag der Anmeldung: 11.03.1998
(73) Patentinhaber: DaimlerChrysler AG, 70567 Stuttgart (DE)
(72) Erfinder: Stengel, Martin, 73660 Urbach (DE); Wörner, Günter, 71394 Kernen (DE)

(56) Entgegenhaltungen:
- DE-A- 2 517 456
- DE-A- 4 137 142

## Beschreibung

Die Erfindung bezieht sich auf eine Schaltvorrichtung für ein Zahnräderwechselgetriebe nach dem Oberbegriff von Patentanspruch 1.

Eine Schaltvorrichtung der eingangs genannten Art ist Gegenstand der älteren, nicht vorveröffentlichten DE-A-196 10 104.

Bei dieser Schaltvorrichtung ist eine Wähl-Stellhülse konzentrisch zu einer Schalt-Stellwelle angeordnet sowie mit letzterer durch das Hilfsgetriebe in Form einer Kulisse-Kulissenstift-Anordnung verbunden, wobei die Schalt-Stellwelle durch ein stangenförmiges Stellglied mit einem Druckmittel-Stellmotor der Axialkolben-Bauart verbunden ist, während zur Betätigung der auf die Wähl-Stellhülse arbeitenden Bremse ein Elektromagnet verwendet ist. Die Wähl-Stellhülse ist gegenüber dem Gehäuse in den Längsrichtungen der Zentralachse unbeweglich festgelegt, während die Schalt-Stellwelle in ihren einer jeweiligen Schaltgasse zum Schalten von einem oder zwei Gängen zugeordneten signifikanten Drehwinkelstellungen durch eine Rasteneinrichtung verrastet ist. Bei dieser Schaltvorrichtung nach der älteren Patentanmeldung ist bereits eine Gangschaltung aus einem momentanen Gang in einen neuen Gang unter Überspringen von wenigstens einem dazwischenliegenden Gang ermöglicht, indem die Schalt-Stellwelle in eine um die mittlere signifikante Stellung schwingende lineare Stellbewegung versetzt und dabei die Bremse der Wähl-Stellhülse beim Durchlaufen der mittleren signifikanten Stellung wechselweise ein- und ausgerückt werden. Um beim Überspringen von Gängen ein Anstoßen der diesen Gängen zugehörigen Synchronisiereinrichtungen durch die Schalt-Stellwelle zu vermeiden, ist ein bestimmter Leerweg für die Schalt-Stellwelle vorzusehen.

Aus der DE 41 37 142 A1 ist eine Schaltvorrichtung anderer Art bekannt, bei welcher ein Elektromotor durch ein Schraubgetriebe zur Umwandlung einer Drehbewegung in eine hin- und hergehende Bewegung mit einer in einem Gehäuse drehbar und axial verschiebbar gelagerten Schaltstange verbunden ist, die durch eine ein- und ausrückbare Bremseinrichtung gegenüber dem Gehäuse derart fixierbar ist, daß die Schaltstange im eingerückten Zustand der Bremse ausschließlich axialverschiebbar - dagegen im ausgerückten Zustand der Bremse sowohl axial verschiebbar als auch drehbar gegenüber dem Gehäuse angeordnet ist. Die Schaltstange ist durch eine gegensinnig zur Bremse ein- und ausrückbare Kupplung direkt mit der Motorwelle des Elektromotores verbunden. Beim Wechsel zwischen Wählen und Schalten müssen sowohl Kupplung und Bremse umgesteuert als auch der Elektromotor stillgesetzt werden.

Aus der DE 43 09 027 A1 ist eine weitere Schaltvorrichtung anderer Art bekannt, bei welcher eine gegenüber einem Druckmittelzylinder drehbar und axial verschiebbar angeordnete Schaltwelle durch einen ersten Axialkolben des Druckmittelzylinders unmittelbar in den Richtungen der Schaltwellenachse zum Schalten der Gänge verlagerbar ist.

Die Schaltwelle wird durch einen zweiten Axialkolben des Druckmittelzylinders unter Vermittlung eines Hilfsgetriebes zur Umwandlung einer hin- und hergehenden Bewegung in eine Drehbewegung in bezug auf die Schaltwellenachse zu Drehbewegungen zum Wählen der Schaltgassen veranlaßt.

Die der Erfindung zugrunde liegende Aufgabe besteht im wesentlichen darin, bei einer Schaltvorrichtung der eingangs genannten Art ebenfalls das Überspringen von wenigstens einem dazwischen liegenden Gang bei einer Umschaltung aus einem momentanen Gang in einen neuen Gang zu ermöglichen, jedoch sollen hierbei besondere Leerwege für das Schalt-Stellglied entfallen oder weitgehend vermieden werden.

Die erläuterte Aufgabe ist gemäß der Erfindung mit den Merkmalen von Patentanspruch 1 in vorteilhafter Weise gelöst.

Bei der Schaltvorrichtung nach der Erfindung bleibt das Schalt-Stellglied bei seiner Betätigung in die dem neuen Gang zugehörige Drehwinkelstellung in den Längsrichtungen der Zentralachse des Gehäuses durch die Feststellvorrichtung unbeweglich festgelegt, so daß besondere Leerwege für das Schalt-Stellglied - um das Anstoßen von Synchronisiereinrichtungen bei dieser Betätigung zu vermeiden - nicht erforderlich sind, weil die für das Anwählen der neuen Drehwinkelstellung erforderliche Linearbewegung nur noch von dem dritten, ausschließlich axial verschiebbar gegenüber dem Gehäuse angeordneten Stellglied ausgeführt werden.

Die Unteransprüche 2 bis 4, 8 und 9 haben vorteilhafte Ausgestaltungen der Schaltvorrichtung nach der Erfindung zum Gegenstand.

Die Unteransprüche 5 bis 7 haben je eine vorteilhafte Ausführungsform der Schaltvorrichtung nach der Erfindung zum Gegenstand.

Einzelheiten der Erfindung ergeben sich aus der nachstehenden Beschreibung von drei in der Zeichnung schematisch dargestellten Ausführungsformen. In der Zeichnung bedeuten
- Fig. 1: eine Schaltvorrichtung nach der Erfindung in einer ersten Ausführungsform, dargestellt in Form eines die Zentralachse enthaltenden Axialschnittes,
- Fig. 2: eine Schaltvorrichtung nach der Erfindung in einer zweiten Ausführungsform, dargestellt in Form eines die Zentralachse enthaltenden Axialschnittes,
- Fig. 3: einen Querschnitt der Schaltvorrichtung von Fig. 2 nach Linie III-III,
- Fig. 4: eine Schaltvorrichtung nach der Erfindung in einer dritten Ausführungsform, dargestellt in Form eines die Zentralachse enthaltenden Teil-Schnittes,
- Fig. 5: einen Teil-Längsschnitt durch die Schaltvorrichtung von Fig. 4 nach Linie V-V, und
- Fig. 6: ein Schaltschema zur Betätigung des Schalt-Stellgliedes bei der Schaltvorrichtung nach der Erfindung.

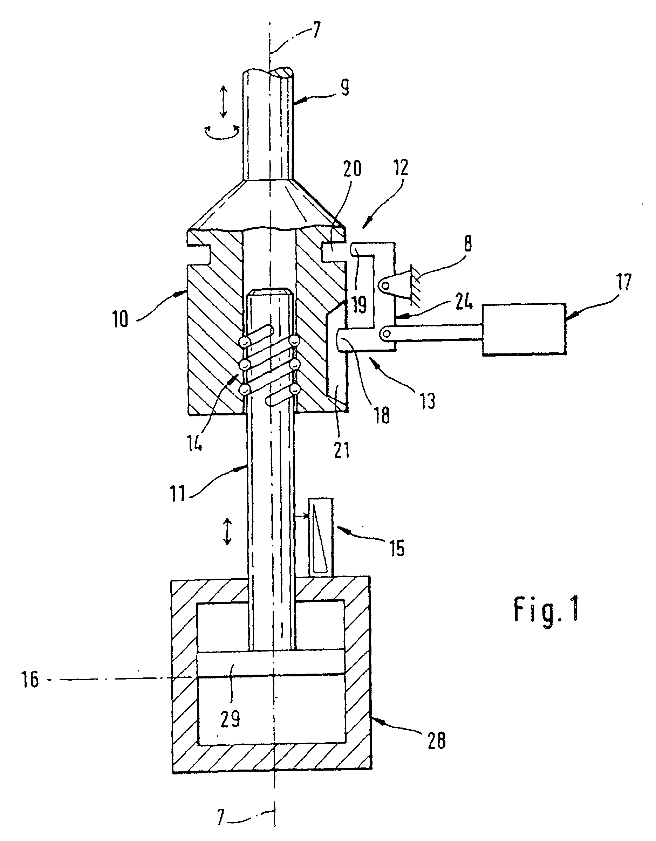

Den drei Ausführungsformen der Fign. 1 bis 5 der Schaltvorrichtung nach der Erfindung ist folgende Anordnung gemeinsam:

Zu einer Zentralachse 7 - 7 eines nicht näher dargestellten Gehäuses 8 eines ebenfalls nicht näher dargestellten Zahnräderwechselgetriebes sind ein Schalt-Stellglied 9 in Form einer Welle, ein Wähl-Stellglied 10 in Form einer Hohlwelle oder Hülse, ein stangenförmiges Stellglied 11 sowie ein Druckmittel-Stellmotor 28 mit einem doppeltwirkenden Axialkolben 29 koaxial angeordnet.

Das Schalt-Stellglied 9 ist gegenüber dem Wähl-Stellglied 10 bewegungsfest bzw. einteilig ausgebildet. Das Wähl-Stellglied 10 ist durch ein Hilfsgetriebe 14 in Form eines Schraubgetriebes zur Umwandlung einer hin- und hergehenden Bewegung in eine Drehbewegung mit dem ausschließlich axial verschiebbar gegenüber dem Gehäuse 8 angeordneten Stellglied 11 verbunden, welches seinerseits mit dem Axialkolben 29 in bewegungsfester Verbindung steht.

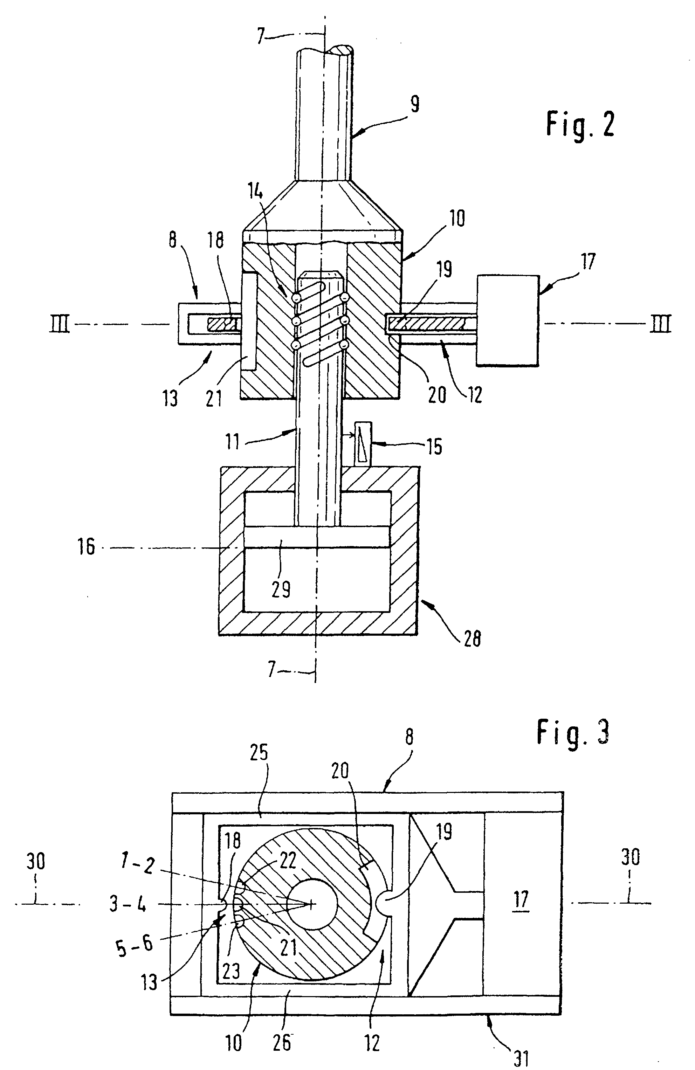

Das Schalt-Stellglied 9 ist in eine signifikante Drehwinkelstellung betätigbar (Fig. 3), in welcher eine Axialnut 21 am Außenumfang des Wähl-Stellgliedes 10 in einer die Zentralachse 7 - 7 enthaltenden Bezugsebene 30 - 30 des Gehäuses 8 liegt. Die Axialnut 21 ist der Schaltgasse 3 - 4 zum wahlweisen Schalten der Vorwärtsgänge 3 und 4 so zugeordnet, daß durch eine Betätigung des Schalt-Stellgliedes 9 in der signifikanten Drehwinkelstellung in den Richtungen der Zentralachse 7 - 7 der vorwärtsgang 3 oder 4 entweder ein- oder ausgerückt wird.

Das Schalt-Stellglied 9 ist in eine weitere signifikante Drehwinkelstellung betätigbar (Fig. 3), in welcher eine Axialnut 22 am Außenumfang des Wähl-Stellgliedes 10 in der Bezugsebene 30 - 30 liegt. Die Axialnut 22 ist der Schaltgasse 1 - 2 zum wahlweisen Schalten der Vorwärtsgänge 1 und 2 so zugeordnet, daß durch eine Betätigung des in der signifikanten Drehwinkelstellung stehenden Schalt-Stellgliedes 9 in den Richtungen der Zentralachse 7 - der Vorwärtsgang 1 oder 2 entweder ein- oder ausgerückt wird.

Das Schalt-Stellglied 9 ist in eine dritte signifikante Drehwinkelstellung betätigbar (Fig. 3), in welcher eine Axialnut 23 am Außenumfang des Wähl-Stellgliedes 10 in der Bezugsebene 30 - 30 liegt. Die Axialnut 23 ist der Schaltgasse 5 - 6 zum wahlweisen Schalten der Vorwärtsgänge 5 und 6 so zugeordnet, daß durch eine Betätigung des in der signifikanten Drehwinkelstellung stehenden Schalt-Stellgliedes 9 in den Richtungen der Zentralachse 7 - 7 der Vorwärtsgang 5 oder 6 entweder ein- oder ausgerückt wird.

Zum Betätigen des Schalt-Stellgliedes 9 in die jeweilige signifikante Drehwinkelstellung wird das Wähl-Stellglied 10 in den Richtungen der Zentralachse 7 - 7 durch eine ein- und ausrückbare Feststellvorrichtung 12 gegenüber dem Gehäuse 8 festgelegt, wobei ein Feststelleingriffsglied 19 in eine Umfangsnut 20 am Außenumfang des Wähl-Stellgliedes 10 so eingerückt ist, daß das Wähl-Stellglied 10 ausschließlich axial unverschiebbar festgelegt ist.

Zum Betätigen des Schalt-Stellgliedes 9 in den Richtungen der Zentralachse 7 - 7 zum Schalten der Gänge wird die Feststellrichtung 12 ausgerückt und eine mit dem Wähl-Stellglied 10 verbundene Bremse 13 eingerückt, wobei ein Bremseingriffsglied 18 in die jeweils in der Bezugsebene 30 - 30 liegende Axialnut 21 bzw. 22 bzw. 23 drehfest, jedoch axialverschiebbar relativ zum Wähl-Stellglied 10 eingreift.

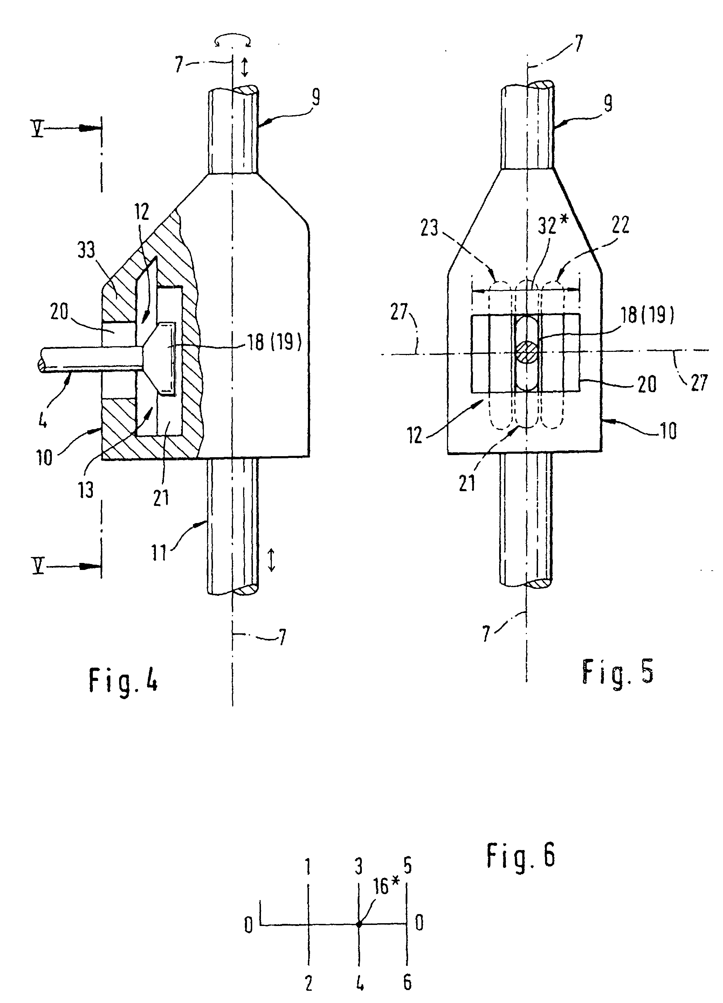

Der Axialkolben 29 weist eine signifikante Hub-Stellung 16 auf, in welcher das Schalt-Stellglied 9 im unbetätigten Zustand eine durch Rückstellfedern zentrierte Ruhestellung 16* am Übergang zwischen der Schaltgasse 3 - 4 und einer neutralen Wählgasse 0 - 0 des Schaltbildes der Figur 6 einnimmt. In der Ruhestellung 16* befindet sich das Schalt-Stellglied 9 in der signifikanten Drehwinkelstellung der Schaltgasse 3 - 4, wobei das Bremseingriffsglied 18 in die zugehörige Axialnut 21 eingreift.

Um sicherzustellen, daß die Feststellvorrichtung 12 und die Bremse 13 nur in der signifikanten Hub-Stellung 16 des Axialkolbens 29 betätigbar sind, ist ein die Hub-Stellung 16 anzeigender Wegsensor 15 mit einer einen Stellmotor 17 der Bremse 13 steuernden, jedoch nicht näher dargestellten Einrichtung verbunden.

Bei der ersten Ausführungsform der Schaltvorrichtung nach der Erfindung nach Fig. 1 ist die Umfangsnut 20 der Feststellvorrichtung 12 gegenüber den Axialnuten 21 bis 23 der Bremse 13 in den Längsrichtungen der Zentralachse 7 - 7 versetzt, wobei das Bremseingriffsglied 18 durch einen gegenüber dem Gehäuse 8 in seinem mittleren Bereich angelenkten Differentialhebel 24 mit dem Feststelleingriffsglied 19 verbunden ist.

Bei der zweiten Ausführungsform der Schaltvorrichtung nach der Erfindung nach den Fign. 2 und 3 ist die Umfangsnut 20 der Feststellvorrichtung 12 gegenüber den Axialnuten 21 bis 23 der Bremse 13 diametral in bezug auf die Zentralachse 7 - 7 angeordnet, wobei das Bremseingriffsglied 18 und das Feststelleingriffsglied 19 durch wenigstens ein das Wähl-Stellglied 10 umgreifendes bügelförmiges Gestänge 25 und/oder 26 miteinander verbunden und die Gestänge in einer zum Gehäuse 8 bewegungsfesten rahmenartigen Führung 31 parallel zur Bezugsebene 30 - 30 verschiebbar geführt sind.

Bei der dritten Ausführungsform der Schaltvorrichtung nach der Erfindung nach den Figuren 4 und 5 sind sowohl die Umfangsnut 20 der Feststellvorrichtung 12 als auch die Axialnuten 21 bis 23 der Bremse 13 mittig zu einer Bezugsebene 27 - 27 des Wähl-Stellgliedes 10 angeordnet, welche senkrecht zur Zentralachse 7 - 7 liegt. Die Axialnuten 21 bis 23 liegen innerhalb des Drehwinkelbereiches, über den sich die Umfangsnut 20 erstreckt, wobei die Position 32* eine dem Bogenmaß des Drehwinkelbereiches entsprechende Sehnenlänge angibt.
Die Umfangsnut 20 liegt in einer radialen Ausbuchtung 33 des Wähl-Stellgliedes 10 und radial außen zu den Axialnuten 21 bis 23. Das Bremseingriffsglied 18 der Bremse 13 und das Feststelleingriffsglied 19 der Feststellvorrichtung 12 sind zu einem gemeinsamen Eingriffsglied 18 (19) baulich vereinigt, welches durch ein Gestänge 34 - das in nicht mehr dargestellter Weise mit dem Stellmotor 17 der Bremse 13 verbunden ist - wechselweise in die Umfangsnut 20 einerseits oder eine der Axialnuten 21 bis 23 andererseits einrückbar ist.

Bei allen drei Ausführungsformen der Schaltvorrichtung ist die Gestänge-Koppelung zwischen Feststellvorrichtung 12, Bremse 13 und Stellmotor 17 so getroffen, daß das Wähl-Stellglied 10 gegenüber dem Gehäuse 8 entweder ausschließlich axial unbeweglich oder ausschließlich drehfest angeordnet ist.

Die Wirkungsweise der Schaltvorrichtung nach der Erfindung ist nachstehend anhand eines Schaltablaufes erläutert.

Bei einer Hochschaltung vom zweiten Gang in den dritten Gang nimmt das Schalt-Stellglied 9 zunächst diejenige Drehwinkelstellung ein, bei welcher die der Schaltgasse 1 - 2 zugeordnete Axialnut 22 in der Bezugsebene 30 - 30 liegt und das Bremseingriffsglied 18 aufnimmt. Durch Steuerung des Stellmotores 28 in seine signifikante Hub-Stellung 16 wird der zweite Gang ausgerückt und das Schalt-Stellglied 9 in die Wählgasse 0 - 0 in Richtung der Zentralachse 7 - 7 verlagert.
Beim Erreichen der signifikanten Hub-Stellung 16 steuert der Wegsensor 15 den Stellmotor 17 der Bremse 13 um, so daß das Wähl-Stellglied 10 durch die Feststellvorrichtung 12 in den Längsrichtungen der Zentralachse 7 - 7 gegenüber dem Gehäuse 8 festgelegt wird. Eine sich anschließende gezielte Betätigung des Stellgliedes 11 durch den Stellmotor 28 führt zu einer Drehbewegung des Schalt-Stellgliedes 9 in diejenige signifikante Drehwinkelstellung, in welcher die der Schaltgasse 3 - 4 zugeordnete Axialnut 21 in der Bezugsebene 30 - 30 liegt.
Beim Erreichen dieser Drehwinkelstellung durch das Schalt-Stellglied 9 wird der Stellmotor 17 wieder umgesteuert, wodurch das Bremseingriffsglied 18 in die Axialnut 21 einrückt und das Feststelleingriffsglied 19 aus der Umfangsnut 20 ausrückt. Beim Erreichen dieser Stellung durch den Stellmotor 17 wird das Schalt-Stellglied 9 durch den Stellmotor 28 in den Richtungen der Zentralachse 7 - 7 über die Wählgasse 0 - 0 hinaus weiter betätigt und dadurch der dritte Gang eingelegt.

## Patentansprüche

1. Schaltvorrichtung für ein Zahnräderwechselgetriebe,
- mit einem in bezug auf eine Zentralachse (7-7) eines Gehäuses (8) drehbar und axial verschiebbar angeordneten Schalt-Stellglied (9),
- mit einem in einem bezug auf die Zentralachse koaxialen Wähl-Stellglied (10), das relativ zum Gehäuse drehbar angeordnet ist,
- mit einem in bezug auf die Zentralachse koaxialen Stellglied (11), das relativ zum Gehäuse ausschließlich axial verschiebbar angeordnet ist,
- mit Mitteln zur Festlegung des Wähl-Stellgliedes gegenüber dem Gehäuse in den Längsrichtungen der Zentralachse,
- mit einer ein- und ausrückbaren Bremse (13) zur Festlegung des Wähl-Stellgliedes gegenüber dem Gehäuse in den Umfangsrichtungen der Zentralachse,
- mit einem Hilfsgetriebe (14) zur Umwandlung einer hin- und hergehenden Bewegung in eine Drehbewegung,
und bei der zwei der drei Stellglieder sowohl zueinander zumindest in den Längsrichtungen der Zentralachse bewegungsfest angeordnet als auch durch das Hilfsgetriebe mit dem dritten Stellglied verbunden sind,
**dadurch gekennzeichnet,**
**daß** eine ein- und ausrückbare Feststellvorrichtung (12) wirkungsmäßig sowohl mit dem Wähl-Stellglied (10) als auch mit der Bremse (13) so verbunden ist, daß das Wähl-Stellglied (10) gegenüber dem Gehäuse (8) wechselweise entweder ausschließlich in den Umfangsrichtungen oder ausschließlich in den Längsrichtungen der Zentralachse (7 -7) festlegbar ist, und daß das Wähl-Stellglied (10) mit dem ausschließlich axial verschiebbar gegenüber dem Gehäuse (8) angeordneten Stellglied (11) durch das Hilfsgetriebe (14) verbunden ist.

2. Schaltvorrichtung nach Anspruch 1,
**dadurch gekennzeichnet,**
**daß** für des Hilfsgetriebe (14) ein Schraubgetriebe verwendet ist.

3. Schaltvorrichtung nach Anspruch 1 oder 2,
**dadurch gekennzeichnet,**
**daß** ein Sensor (15) für eine signifikante mittlere Stellung (16) des ausschließlich axial verschiebbar gegenüber dem Gehäuse (8) angeordneten Stellgliedes (11) verwendet ist und mit einem Stellmotor (17) zum Betätigen der Bremse (13) so zusammenarbeitet, daß die Bremse (13) ausschließlich in der signifikanten Stellung (16) des Stellgliedes (11) ein- und ausrückbar ist.

4. Schaltvorrichtung nach einem der Ansprüche 1 bis 3,
**dadurch gekennzeichnet,**
**daß** das Wähl-Stellglied (10) eine zur Zentralachse (7 - 7) zentrische Umfangsnut (20) aufweist, in welche ein gegenüber einem ein- und ausrückbaren Bremseingriffsglied (18) der Bremse (13) bewegungsfest angeordnetes Feststelleingriffsglied (19) der Feststellvorrichtung (12) einrückbar ist.

5. Schaltvorrichtung nach Anspruch 4,
**dadurch gekennzeichnet ;**
**daß** die Umfangsnut (20 in Fig. 1) gegenüber Axialnuten (21 bis 23) des Wähl-Stellgliedes (10), in welche das Bremseingriffsglied (18) einrückbar ist, in den Längsrichtungen der Zentralachse (7 - 7) versetzt ist, und daß das Bremseingriffsglied (18) und das Feststelleingriffsglied (19) durch einen in seinem mittleren Bereich gegenüber dem Gehäuse (8) schwenkbar gelagerten Differentialhebel (24) miteinander verbunden sind.

6. Schaltvorrichtung nach Anspruch 4,
**dadurch gekennzeichnet,**
**daß** die Umfangsnut (20 in Fign. 2 und 3) gegenüber Axialnuten (21 bis 23) des Wähl-Stellgliedes (10), in welche das Bremseingriffsglied (18) einrückbar ist, diametral zur Zentralachse (7 - 7) angeordnet ist, und daß das Bremseingriffsglied (18) und das Feststelleingriffsglied (19) durch wenigstens ein das Wähl-Stellglied (10) umgreifendes bügelförmiges Gestänge (25 und/oder 26) verbunden sind.

7. Schaltvorrichtung nach Anspruch 4,
**dadurch gekennzeichnet,**
**daß** sowohl die Umfangsnut (20 in Fign. 4 und 5) als auch Axialnuten (21 bis 23) des Wähl-Stellgliedes (10), in welche das Bremseingriffsglied (18) einrückbar ist, mittig zu einer Bezugsebene (27 - 27) des Wähl-Stellgliedes (10) angeordnet sind, daß die Bezugsebene (27 - 27) senkrecht zur Zentralachse (7 - 7) liegt, daß die Axialnuten (21 bis 23) in dem Drehwinkelbereich liegen, über den sich die Umfangsnut (20) erstreckt, und
**daß** die Umfangsnut (20) radial außen zu den Axialnuten (21 bis 23) liegt sowie für das Bremseingriffsglied (18) und für das Feststelleingriffsglied (19) ein gemeinsames Eingriffsglied (18 (19)) verwendet ist.

8. Schaltvorrichtung nach einem der Ansprüche 1 bis 7,
**dadurch gekennzeichnet,**
**daß** das ausschließlich axial verschiebbar gegenüber dem Gehäuse (8) angeordnete Stellglied (11) mit einem Druckmittel-Stellmotor (28) der Axialkolben-Bauart verbunden ist.

9. Schaltvorrichtung nach einem der Ansprüche 3 bis 8,
**dadurch gekennzeichnet,**
**daß** für den Stellmotor (17) der Bremse (13) ein Elektromagnet verwendet ist.

## Claims

1. Switching device for a change gearbox,
- with a switch actuator (9) mounted so as to be rotatable and axially displaceable relative to a central axis (7-7) of a housing (8),
- with a selector-actuator (10) mounted coaxially with the central axis and rotatable relative to the housing,
- with an actuator (11) mounted coaxially with the central axis which is exclusively axially displaceable relative to the housing,
- with means for immobilising the selector-actuator in the longitudinal directions of the central axis relative to the housing,
- with a brake (13) which can be engaged and disengaged for immobilising the selector-actuator in the circumferential directions of the central axis relative to the housing,
- with an auxiliary gear system (14) for converting a reciprocating motion into a rotary motion,
and in which two of the three actuators are disposed so as to be immobile relative to one another, at least in the longitudinal directions of the central axis, as well as linked to the third actuator by the auxiliary gear system,
**characterised in that**
an immobilising mechanism (12), which can be engaged and disengaged, is co-operatively linked both to the selector actuator (10) and the brake (13) in such a way that the selector-actuator (10) can be immobilised relative to the housing (8), alternately either exclusively in the circumferential directions or exclusively in the longitudinal directions of the central axis (7 - 7), and **in that** the selector-actuator (10) is linked by the auxiliary gear mechanism (14) to the actuator (11) that is disposed so as to be exclusively axially displaceable relative to the housing (8).

2. Switching device as claimed in claim 1,
**characterised in that**
a worm gear is used for the auxiliary gear system (14).

3. Switching device as claimed in claim 1 or 2,
**characterised in that**
a sensor (15) is used to detect a significant central position (16) of the actuator (11) that is disposed so as to be exclusively axially displaceable relative to the housing (8) and co-operates with an actuator motor (17) for operating the brake (13) in such a way that the brake (13) can be engaged and disengaged exclusively when the actuator (11) is in the significant position (16).

4. Switching device as claimed in one of claims 1 to 3,
**characterised in that**
the selector-actuator (10) has a circumferential groove (20), disposed radially by reference to the central axis (7 - 7), in which an immobilising locating member (19) of the immobilising mechanism (12), which is disposed so as to be immobile relative to an engaging and disengaging brake engaging member (18) of the brake (13), can be engaged.

5. Switching device as claimed in claim 4,
**characterised in that**
the circumferential groove (20 in Fig. 1) is offset, in the longitudinal directions of the central axis (7-7), from axial grooves (21 to 23) of the selector-actuator (10) in which the brake engaging member (18) can be engaged, and **in that** the brake engaging member (18) and the immobilising locating member (19) are linked to one another by a differential lever (24) mounted in the central region of the latter so as to be pivotable relative to the housing (8).

6. Switching device as claimed in claim 4,
**characterised in that**
by reference to the central axis (7 - 7), the circumferential groove (20 in Figs. 2 and 3) is arranged diametrically opposite axial grooves (21 to 23) of the selector-actuator (10) in which the brake engaging member (18) can be engaged and **in that** the brake engaging member (18) and the immobilising locating member (19) are linked by at least one stirrup-shaped rod linkage (25 and/or 26) engaging round the selector-actuator (10).

7. Switching device as claimed in claim 4,
**characterised in that**
both the circumferential groove (20 in Figs. 4 and 5) and axial grooves (21 to 23) of the selector actuator (10) in which the brake engaging member (18) can be engaged are arranged centrally relative to a reference plane (27 - 27) of the selector actuator (10), the reference plane (27 - 27) lying perpendicular to the central axis (7 - 7), the axial grooves (21 to 23) lie in the region of the rotation angle about which the circumferential groove (20) extends and the circumferential groove (20) lies radially outside of the axial grooves (21 to 23) and is used as a common engaging member (18(19)) for both the brake engaging member (18) and for the immobilising locating member (19).

8. Switching device as claimed in one of claims 1 to 7,
**characterised in that**
the actuator (11) which is disposed so as to be exclusively axially displaceable relative to the housing (8) is linked to a pressure medium-actuator motor (28) of the axial cylinder type.

9. Switching device as claimed in one of claims 3 to 8,
**characterised in that**
an electromagnet is used for the actuator motor (17) of the brake (13).

## Revendications

1. Dispositif de commande d'une boîte de vitesses à engrenages, comportant :
- un organe de positionnement de commande (9) agencé mobile en rotation par rapport à un axe central (7-7) d'un carter (8) et mobile en translation axiale,
- un organe de positionnement de sélection (10) coaxial par rapport à l'axe central, qui est agencé mobile en rotation par rapport au carter,
- un organe de positionnement (11) coaxial par rapport à l'axe central, qui est agencé mobile exclusivement en translation axiale par rapport au carter,
- des moyens pour fixer l'organe de positionnement de sélection par rapport au carter dans les directions longitudinales de l'axe central,
- un frein (13) susceptible d'être engagé et dégagé pour fixer l'organe de positionnement de sélection par rapport au carter dans les directions périphériques de l'axe central,
- une transmission auxiliaire (14) pour convertir un mouvement en va-et-vient en un mouvement de rotation,
et dans lequel deux organes de positionnement parmi les trois sont à la fois agencés solidairement l'un par rapport à l'autre du moins dans les directions longitudinales de l'axe central et reliés au troisième organe de positionnement par la transmission auxiliaire,
**caractérisé en ce qu'**un dispositif d'arrêt (12) susceptible d'être engagé et dégagé est relié, sur le plan d'action, aussi bien à l'organe de positionnement de sélection (10) qu'au frein (13), de telle sorte que l'organe de positionnement de sélection (10) peut être fixé en alternance soit exclusivement dans les directions périphériques soit exclusivement dans les directions longitudinales de l'axe central (7-7), et **en ce que** l'organe de positionnement de sélection (10) est relié via la transmission auxiliaire (14) à l'organe de positionnement (11) agencé mobile exclusivement en translation axiale par rapport au carter (8).

2. Dispositif de commande selon la revendication 1, **caractérisé en ce que** la transmission auxiliaire (14) est formée par une transmission hélicoïdale.

3. Dispositif de commande selon l'une ou l'autre des revendications 1 et 2, **caractérisé en ce qu'**un détecteur (15) est utilisé pour une position médiane significative (16) de l'organe de positionnement (11) agencé mobile exclusivement en translation axiale par rapport au carter (8) et coopère avec un servomoteur (17) pour actionner le frein (13), de telle sorte que le frein (13) est susceptible d'être engagé et dégagé exclusivement dans la position significative (16) de l'organe de positionnement (11).

4. Dispositif de commande selon l'une quelconque des revendications 1 à 3, **caractérisé en ce que** l'organe de positionnement de sélection (10) comprend une gorge périphérique (20) centrée sur à l'axe central (7-7), dans laquelle peut venir s'engager un organe d'engagement d'arrêt (19) du dispositif d'arrêt (12), qui est agencé solidairement par rapport à un organe d'engagement de frein (18), susceptible d'être engagé et dégagé, du frein (13).

5. Dispositif de commande selon la revendication 4, **caractérisé en ce que** la gorge périphérique (20 dans la figure 1) est décalée dans les directions longitudinales de l'axe central (7-7) par rapport à des gorges axiales (21 à 23) de l'organe de positionnement de sélection (10), dans lesquelles peut venir s'engager l'organe d'engagement de frein (18), et **en ce que** l'organe d'engagement de frein (18) et l'organe d'engagement d'arrêt (19) sont reliés l'un à l'autre par un levier différentiel (24) monté mobile en basculement dans sa zone médiane par rapport au carter (8).

6. Dispositif de commande selon la revendication 4, **caractérisé en ce que** la gorge périphérique (20 dans les figures 2 et 3) est agencée, par rapport à l'axe central (7-7), diamétralement à l'opposé de gorges axiales (21 à 23) de l'organe de positionnement de sélection (10) dans lesquelles peut venir s'engager l'organe d'engagement de frein (18), et **en ce que** l'organe d'engagement de frein (18) et l'organe d'engagement d'arrêt (19) sont reliés par au moins une tringlerie (25 et/ou 26) en forme d'étrier entourant l'organe de positionnement de sélection (10).

7. Dispositif de commande selon la revendication 4, **caractérisé en ce qu'**aussi bien la gorge périphérique (20 dans les figures 4 et 5) que les gorges axiales (21 à 23) de l'organe de positionnement de sélection (10), dans lesquelles peut venir s'engager l'organe d'engagement de frein (18), sont ménagées au centre par rapport à un plan de référence (27-27) de l'organe de positionnement de sélection (10), **en ce que** le plan de référence (27-27) est perpendiculaire à l'axe central (7-7), **en ce que** les gorges axiales (21 à 23) se situent dans la zone angulaire de rotation sur laquelle s'étend la gorge périphérique (20), **en ce que** la gorge périphérique (20) se situe radialement à l'extérieur par rapport aux gorges axiales (21 à 23), et **en ce qu'**un organe d'engagement commun (18, 19) est utilisé pour l'organe d'engagement de frein (18) et pour l'organe d'engagement d'arrêt (19).

8. Dispositif de commande selon l'une quelconque des revendications 1 à 7, **caractérisé en ce que** l'organe de positionnement (11) agencé mobile exclusivement en translation axiale par rapport au carter (8) est relié à un servomoteur à fluide sous pression (28) du type de construction à piston axial.

9. Dispositif de commande selon l'une quelconque des revendications 3 à 8, **caractérisé en ce qu'**un électroaimant est utilisé comme servomoteur (17) pour le frein (13).
